## Europäisches Patentamt
## European Patent Office
## Office européen des brevets

(19)

(11) Publication number: **0 257 865**
**B1**

(12) **EUROPEAN PATENT SPECIFICATION**

(45) Date of publication of the patent specification: 14.11.90

(51) Int. Cl.⁵: **B29D 30/02**

(21) Application number: **87306923.1**

(22) Date of filing: **05.08.87**

(54) Tyre construction method.

(30) Priority: **19.08.86 GB 8620094**

(43) Date of publication of application:
**02.03.88 Bulletin 88/9**

(45) Publication of the grant of the patent:
**14.11.90 Bulletin 90/46**

(84) Designated Contracting States:
**AT BE CH DE ES FR GB IT LI LU NL SE**

(56) References cited:
**EP-A- 0 198 626**
**FR-A- 2 462 280**
**GB-A- 1 365 341**
**GB-A- 2 047 637**

(73) Proprietor: **Watts Industrial Tyres Limited, Church Road, Lydney Gloucestershire GL15 5EN(GB)**

(72) Inventor: **White, Lewis William, Treetops Lydney Road, Yorkley Gloucestershire(GB)**

(74) Representative: **Carter, Gerald et al, Arthur R. Davies & Co. 27 Imperial Square, Cheltenham, Gloucestershire GL50 1RQ(GB)**

ACTORUM AG

**Description**

This invention relates to solid types for vehicles. The expression solid tyre is to be taken to mean tyres which do not rely upon a volume of air under pressure contained within a cavity to maintain the tyre in its correct shape during use. The invention is primarily concerned with solid tyres for vehicles such as fork-lift trucks, cranes or other mechanical handling equipment or other vehicles not generally used on highways and in which non-puncturing characteristics are particularly important.

The advantages of solid tyres are well known in that they do not need to be filled with air under pressure and are thus free from maintenance. They also do not puncture. This is particularly important in factories, or other environments where objects liable to damage the tyres may be present.

Many solid tyres are made as one piece, from natural or synthetic rubbers, with or without fabric or fibre reinforcements. However, it is common knowledge that tyres made of these materials tend to mark floors, and in situations such as hospitals and the food industry this is undesirable. The use of certain plastics materials can overcome this problem, but many plastics materials which are acceptable, in that they do not leave marks, are rather too hard, whereas softer plastics materials wear relatively quickly.

This problem may be overcome by forming the tyre from an outer casing of a relatively hard-wearing resilient plastics material which is moulded over an inner core of a softer resilient plastics material. However, such two-part tyres may be difficult to manufacture, and the present invention sets out to provide a convenient and efficient method of manufacturing such a two-part solid tyre.

According to the invention there is provided a method of manufacturing a solid tyre from plastics material, characterised by the steps of locating a hollow annular element within an annular cavity in a mould to define a space between the exterior of the element and the interior of the mould, said space having the desired shape of an outer tyre casing to be produced, filling said space with a first settable resilient plastics material which has relatively hard wearing properties, setting the first plastics material, filling the interior of the hollow annular element with a second settable resilient plastics material which is relatively soft, and setting the second plastics material to form an inner core of the tyre.

Preferably, the hollow annular element is formed of flexible material, the annular shape of the element being sustained, before said space is filled with the first plastics material, by the supply of fluid under pressure to the interior of the element.

In this context the term "fluid" is to be interpreted as including liquids or gases, although in the preferred arrangement a gas, usually air, is used.

Conveniently the flexible hollow element may be supplied with said fluid under pressure, and sealed, before being positioned within the annular cavity of the mould.

Preferably said space is filled with said first plastics material at a pressure which is not greater than the pressure of said fluid within the flexible hollow element.

Spacers may be located between the exterior of the hollow annular element and the interior of the mould to locate the hollow element within the mould.

There may be provided in the mould an aperture for the escape of air from the said space as it is filled with said first plastics material.

After said first plastics material has set, an outlet opening is preferably formed through the first plastics material and the wall of the hollow annular element for the escape of said fluid from the interior of the hollow element as it is filled with said second plastics material.

The hollow annular element may be provided with an inlet passage which extends to the exterior of the outer casing formed by setting of the first plastics material, through which passage the second plastics material is injected into the interior of the hollow annular element.

Reinforcement may be located in said space between the hollow annular element and the interior of the mould before the space is filled with said first plastics material.

The invention includes within its scope a solid tyre when manufactured by any of the methods referred to above.

A preferred form of the invention will now be described by way of example with reference to the accompanying drawings in which:

Figure 1 is a side view of a mould used in the construction of a tyre in a method according to the invention,

Figure 2 is a cross-sectional view on the line 2-2 in Figure 1, and

Figure 3 is a cross-sectional view of a typre, to a larger scale, during a further stage in production.

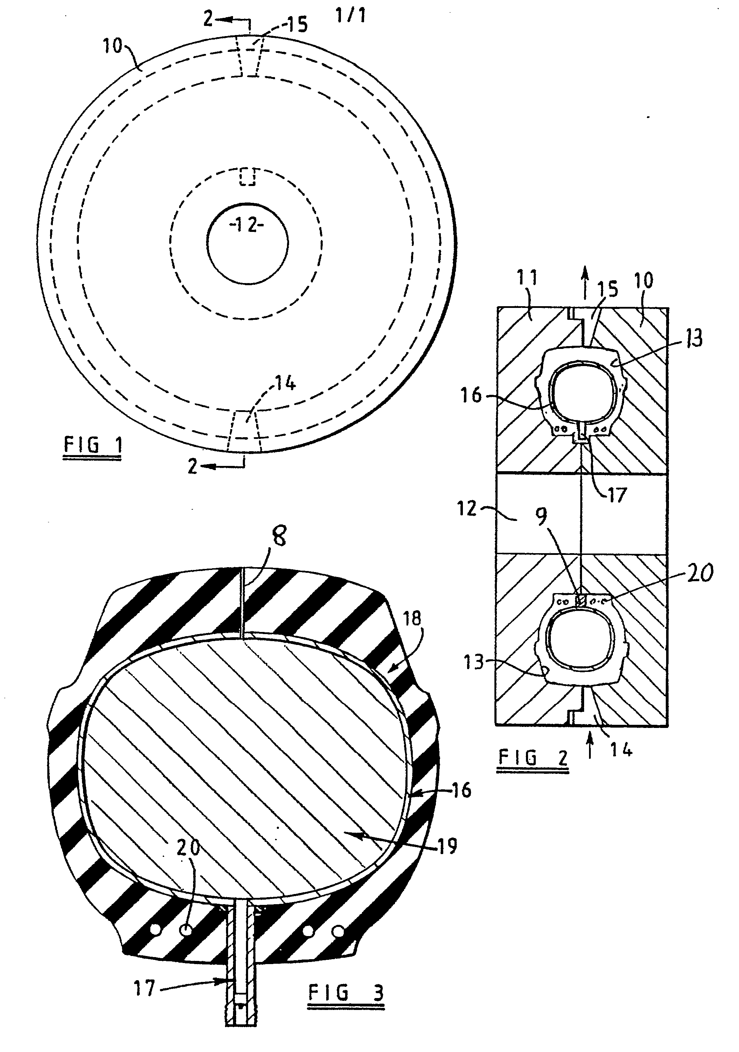

Figures 1 and 2 show a two-part mould 10, 11 of generally cylindrical form, having a central aperture 12. Defined between the two mould parts 10, 11 is an annular cavity 13 having the shape of the exterior of a tyre to be produced. As best seen in Figure 2, the cross-sectional shape of the cavity includes portions defining an outer peripheral wall and two side walls for the tyre, as well as an inner peripheral bead section for fitting into a wheel rim. A tread pattern may be formed on the peripheral surface of the mould cavity, so as to form a corresponding tread pattern on the outer periphery of the finished tyre.

The mould parts provide lower and upper slots 14, 15 at diametrically opposite positions. The lower slot 14 forms an entry opening for material to fill the mould and the upper slot 15 forms an outlet for the escape of air, as the material enters.

Located within the mould cavity 13 is a hollow annular element in the form of an inflatable annular membrane 16 of rubber or other suitable flexible material. The membrane 16 is spaced from the inner walls of the mould cavity 13 by spacers 9 which are preferably formed of a similar plastics material to that from which the outer portion of the tyre is to be moulded. The membrane has a closable inlet valve 17 comprising a passage through which the membrane can be inflated with air (or other fluid) under pressure. The mould parts define a socket to receive the projecting part of the valve 17.

For convenience, the membrane will normally be inflated before it is positioned in the mould cavity, but the invention does not exclude the possibility of the membrane being inflated after it has been introduced into the mould. In this case the valve 17 must project out of the mould.

When the mould has been assembled with the inflated membrane within it, the space around the membrane in the interior of the mould is filled with a first settable plastics material in liquid form, the liquid being injected into the mould through the lower slot 14, and air escaping from the mould through the upper slot 15. The liquid plastics is introduced under a pressure which is not greater than the air pressure within the membrane 16, so that there is no tendency for the pressure to compress the membrane. The plastics material is then set, usually by curing.

The plastics material is of a kind which, when cured, has the resilient hard-wearing characteristics required for the exterior cover of the tyre. A suitable material is a polyurethane composition based on a toluene diisocyanate/polytetramethylene ether glycol prepolymer corss-linked with 4-4 methylene bis orthochlorinaline. This may conveniently be cured at 100° C over an appropriate period. After curing, the mould parts are separated and the moulded outer casing 18 containing the inflated membrane is removed.

As seen in Figure 3, the outer casing 18 completely surrounds the membrane 16 but the valve 17 extends through the bead wall of the outer casing. (The projecting portion of the valve 17 may be coated with grease or other separting agent, before location of the membrane within the mould, to prevent it becoming encased in the first plastics material.) The interior of the hollow membrane 16 is then opened to the atmosphere by drilling a small hole 8, for example about 3 mm in diameter, through the outer casing 18 and membrane 16 at a position diametrically opposite to the valve 17.

A second settable plastics material in liquid form is then injected into the interior of the membrane 16 through the valve 17 and, as it enters, air is expelled from the membrane through the aforementioned hole 8 until the interior of the membrane is completely filled with the plastics material, to form the core 19. Emergence of the liquid plastics from the hole 8 indicates when the membrane is completely filled, and the hole is then sealed, for example with a small plastics plug. The second plastics material is then set, usually by curing.

A suitable plastics material for the core is a polyurethane, being in one example a quasi-prepolymer based on a toluene diisocyanate, a mixture of low molecular weight polyols and some oils extension. In one example, the polyurethane mixture was preblended in the ratio 1:1 by volume. However other ratios can be used. This material was introduced into the interior of the membrane at 30° C. The assembly can be heated or may be transferred to a circulating air oven operating at 35° to 40° C to cure the inner core over a period of forty eight hours.

The desired physical properties of the outer casing 18 in this example are as follows:
Hardness: Shore "A"= 80 A
Elongation= 800%
The desired physical properties of the inner core 19 are as follows:
Hardness: Shore "A"= 28 A
Elongation= 380%
Reinforcement may be incorporated in the outer casing during the moulding stage and this is particularly desirable in the bead region of the tyre. For example, as shown in Figure 3, the reinforcement may be in the form of steel wires 20 embedded in the bead portion and extending around the inner periphery of the tyre.

Other materials for the outer casing or for the inner core may be selected according to requirements. Injection moulding or blow moulding techniques can be used for filling the mould and producing the inner core.

## Claims

1. A method of manufacturing a solid tyre from plastics material, comprising by the steps of locating a hollow annular element (16) within an annular cavity (13) in a mould (10,11) to define a space between the exterior of the element and the interior of the mould, said space having the desired shape of an outer tyre casing to be produced, filling said space with a first settable resilient plastics material which has relatively hard wearing properties, setting the first plastics material, filling the interior of the hollow annular element (16) with a second settable resilient plastics material which is relatively soft, and setting the second plastics material to form an inner core of the tyre.

2. A method according to Claim 1, characterised in that the hollow annular element (16) is formed of flexible material, the annular shape of the element being sustained, before said space is filled with the first plastics material, by the supply of fluid under pressure to the interior of the element.

3. A method according to the Claim 2, characterised in that the flexible hollow element (16) is inflated by a supply of gas under pressure to the interior thereof.

4. A method according to Claim 2 or Claim 3, characterised in that the interior of the flexible hollow element (16) is supplied with said fluid under pressure, and sealed, before being positioned within the annular cavity (13) of the mould (10,11).

5. A method according to any of Claims 2 to 4, characterised in that said space is filled with said first plastics material at a pressure which is not greater than the pressure of said fluid within the flexible hollow element (16).

6. A method according to any of Claims 1 to 5, characterised in that spacers are located between the exterior of the hollow annular element (16) and the interior of the mould to locate the hollow element within the mould.

7. A method according to any of Claims 1 to 6, characterised by providing in the mould an aperture (15) for the escape of air from the said space as it is filled with said first plastics material.

8. A method according to any of Claims 1 to 7, characterised by the step, after said first plastics material has set, of forming an outlet opening (8) through the first plastics material and the wall of the hollow annular element (16) for the escape of said fluid from the interior of the hollow element as it is filled with said second plastics material.

9. A method according to any of Claims 1 to 8, characterised in that the hollow annular element (16) is provided with an inlet passage (17) which extends to the exterior of the outer casing (18) formed by setting of the first plastics material, through which passage the second plastics material is injected into the interior of the hollow annular element.

10. A method according to any of Claims 1 to 9, characterised in that reinforcement (20) is located in said space between the hollow annular element and the interior of the mould before the space is filled with said first plastics material.

## Revendications

1. Procédé de préparation d'un pneu solide en matière plastique, comprenant les étapes de placer un élément creux annulaire (16) dans une cavité annulaire (13) dans un moule (10, 11) pour définir un espace entre la surface extérieure de l'élément et la surface intérieure du moule, ledit espace ayant la forme désirée d'un pneu extérieur à produire, remplir ledit espace d'une première matière plastique élastique pouvant être solidifiée et qui a des propriétés d'usure relativement dures, de solidifier la première matière plastique, de remplir l'intérieur de l'élément creux annulaire (16) d'une seconde matière plastique élastique pouvant être solidifiée et qui est relativement molle, et solidifier la seconde matière plastique pour former un noyau intérieur du pneu.

2. Procédé selon la revendication 1, caractérisé en ce que l'élément annulaire creux (16) est formé d'une matière flexible, la forme annulaire de l'élément étant soutenue avant le remplissage dudit espace avec la première matière plastique par l'aduction d'un fluide sous pression dans l'intérieur de l'élément.

3. Procédé selon la revendication 2, caractérisé en ce que l'élément creux flexible (16) est gonflé à l'aide d'une source de gaz sous pression se trouvant à l'intérieur de celui-ci.

4. Procédé selon la revendication 2 ou 3, caractérisé en ce que l'intérieur de l'élément creux flexible (16) est rempli d'un fluide sous pression et bouché avant d'être placé dans la cavité annulaire (13) du moule (10, 11).

5. Procédé selon l'une quelconque des revendications 2 à 4, caractérisé en ce que ledit espace est rempli avec ladite première matière plastique à une pression qui n'est pas plus grande que la pression dudit fluide dans l'élément creux flexible (16).

6. Procédé selon l'une quelconque des revendications 1 à 5, caractérisé en ce que des éléments d'espacement sont placés entre la surface extérieure de l'élément annulaire creux et la surface intérieure du moule pour maintenir l'élément creux en place dans le moule.

7. Procédé selon l'une quelconque des revendications 1 à 6, caractérisé par l'étape d'aménager dans le moule une ouverture (15) pour permettre à l'air dudit espace d'échapper quand ledit espace est rempli avec ladite première matière plastique.

8. Procédé selon l'une quelconque des revendications 1 à 7, caractérisé par l'étape, après la solidification de ladite première matière plastique, de former un trou de sortie (8) à travers ladite première matière plastique et la paroi de l'élément annulaire creux (16) pour laisser échapper ledit fluide de l'intérieur de l'élément creux quand il est rempli avec ladite seconde matière plastique.

9. Procédé selon l'une quelconque des revendications 1 à 8, caractérisé en ce que l'élément annulaire creux (16) est pourvu d'un passage d'entrée (17) qui s'étend vers l'extérieur du pneu extérieur (18) formé par la solidification de la première matière plastique par lequel la seconde matière plastique est injectée à l'intérieur de l'élément annulaire creux.

10. Procédé selon l'une quelconque des revendications 1 à 9, caractérisé en ce qu'un renforcement (20) se trouve dans ledit espace entre l'élément annulaire creux et la surface intérieure du moule avant que l'espace ne soit rempli avec ladite première matière plastique.

## Patentansprüche

1. Verfahren zur Herstellung eines Massivreifens aus Kunststoff bestehend aus den Verfahrensschritten des Anordnens eines hohlen ringförmigen Elementes (16) in einer ringförmigen Kammer (13) in einer Form (10, 11), um einen Hohlraum zwischen der Aussenfläche des Elementes und der Innenfläche der Form zu bilden, wobei dieser Hohlraum die gewünschte Form eines herzustellenden Aussenreifens hat, des Auffüllens des Hohlraumes mit einem ersten erstarrbaren elastischen Kunststoff, welcher relativ harte Abriebseigenschaften hat, des Erstarrenlassens des ersten Kunststoffmaterials, des Auffüllens des Innern des hohlen ringförmigen Elementes (16) mit einem zweiten erstarrbaren elastischen Kunststoffmaterial, welches relativ weich ist, und des Erstarrenlassens des zweiten Kunststoffmaterials, um den inneren Kern des Reifens zu bilden.

3. Verfahren nach Anspruch 1, dadurch gekennzeichnet, dass das hohle ringförmige Element (16) aus einem flexiblen Material besteht, wobei die Ringform des Elementes vor dem Auffüllen des Hohlraumes mit dem ersten Kunststoffmaterial durch Zufuhr eines unter Druck stehenden Fluidums in das Innere des Elementes aufrechterhalten wird.

3. Verfahren nach Anspruch 2, dadurch gekennzeichnet, dass das flexible hohle Element (16) mit Hilfe einer im Innern desselben angeordneten Druckgasquelle aufgeblasen wird.

4. Verfahren nach Anspruch 2 oder 3, dadurch gekennzeichnet, dass dem Innern des flexiblen hohlen Elementes (16) ein Fluidum unter Druck zugeführt wird und dieses vor dem Anordnen des Elementes in der ringförmigen Kammer (13) der Form (10, 11) abgedichtet wird.

5. Verfahren nach einem der Ansprüche 2 bis 4, dadurch gekennzeichnet, dass der Hohlraum mit dem ersten Kunststoffmaterial bei einem Druck gefüllt wird, welcher nicht grösser als der Druck des Fluidums in dem flexiblen hohlen Element (16) ist.

6. Verfahren nach einem der Ansprüche 1 bis 5, dadurch gekennzeichnet, dass Abstandshalter zwischen der Aussenfläche des hohlen ringförmigen Elementes und der Innenfläche der Form angeordnet sind, um das hohle Element in der Form zu fixieren.

7. Verfahren nach einem der Ansprüche 1 bis 6, dadurch gekennzeichnet, dass in der Form eine Oeffnung (15) vorgesehen ist damit die Luft aus dem Hohlraum entweichen kann, wenn er mit dem ersten Kunststoffmaterial gefüllt wird.

8. Verfahren nach einem der Ansprüche 1 bis 7, gekennzeichnet durch den Verfahrensschritt, nach dem Erstarren des ersten Kunststoffmaterials, des Formens einer Auslassöffnung (8) durch das erste Kunststoffmaterial und die Wand des hohlen ringförmigen Elementes (16), damit das Fluidum aus dem Innern des hohlen Elementes entweichen kann, wenn es mit dem zweiten Kunststoffmaterial gefüllt wird.

9. Verfahren nach einem der Ansprüche 1 bis 8, dadurch gekennzeichnet, dass das hohle ringförmige Element (16) mit einem Eingangsdurchlass (17) versehen ist, welcher sich nach aussen von dem durch das Erstarren des ersten Kunststoffmaterials gebildeten Aussenreifens (18) erstreckt und durch den das zweite Kunststoffmaterial in das Innere des hohlen ringförmigen Elementes eingespritzt wird.

10. Verfahren nach einem der Ansprüche 1 bis 9, dadurch gekennzeichnet, dass eine Verstärkung (20) in dem Raum zwischen dem hohlen ringförmigen Element und der Innenfläche der Form angeordnet wird bevor der Hohlraum mit dem ersten Kunststoffmaterial aufgefüllt wird.

FIG 1

FIG 2

FIG 3